# FASCICULE DE BREVET EUROPEEN

(11) **EP 1 577 213 B1**
(45) Date de publication et mention de la délivrance du brevet: **06.09.2006**
(21) Numéro de dépôt: 05290400.0
(22) Date de dépôt: 22.02.2005
(51) Int. Cl.: B64D 11/06

(54) **Agencement de sièges pour cabine d'avion**
Sitzanordnung für Flugzeugkabine
Arrangement of seats for aircraft cabin

(30) Priorité: 26.02.2004 FR 0450365
(43) Date de publication de la demande: 21.09.2005
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Mercier, Guy, 36100 Neuvy-Pailloux (FR)
(74) Mandataire: Geismar, Thierry

(56) Documents cités:
- EP-A- 1 364 874
- WO-A-03/013903
- GB-A- 2 362 095
- US-A1- 2002 070 314

## Description

L'invention concerne un agencement de sièges individuels pour passagers d'un avion, et plus particulièrement un agencement de sièges comprenant une pluralité de sièges convertibles en couchettes et disposés en rangées, chaque rangée s'étendant selon la direction longitudinale du véhicule, et chaque siège étant orienté vers l'avant de l'avion.

Dans les cabines d'avion dans lesquelles les sièges sont convertibles en couchettes, l'agencement desdits sièges doit tenir compte de plusieurs critères : il est en effet nécessaire d'assurer aux passagers non seulement un confort élevé, mais également des conditions de sécurité optimales, et ce tout en prévoyant un nombre de sièges par cabine suffisant pour répondre aux exigences économiques liées à ce type de transport.

On connaît déjà des agencements de sièges convertibles en couchettes, pour cabines d'avion, dans lesquels les sièges sont disposés en plusieurs rangées longitudinales. Ces agencements prévoient un groupe central et deux groupes latéraux de rangées situés de part et d'autre du groupe central, le groupe central étant séparé des deux groupes latéraux respectivement par un couloir de circulation. Toutefois, dans ce type d'agencement, les passagers qui sont situés à distance d'un couloir de circulation sont obligés, pour accéder audit couloir, d'enjamber leur voisin si celui-ci a placé son siège en position de couchette. Ce type d'agencement est donc peu satisfaisant en terme de confort, mais également en terme de sécurité, si par exemple les passagers doivent rejoindre rapidement les issues de secours.

Pour résoudre ces inconvénients, l'invention propose un agencement de sièges pour véhicule de transport, qui assure à la fois le confort et la sécurité des passagers, tout en prévoyant un nombre de places en accord avec les exigences économiques liées au type de transport concerné.

A cet effet, l'invention a pour objet un agencement de sièges individuels pour passagers d'un avion, comprenant une pluralité de sièges convertibles en couchettes et disposés en rangées, chaque rangée s'étendant selon la direction longitudinale de l'avion, et chaque siège étant orienté vers l'avant de l'avion, cet agencement comprenant :
- deux groupes latéraux de deux rangées contiguës, chaque groupe étant disposé le long d'une paroi du fuselage de l'avion, les sièges d'une rangée étant décalés longitudinalement par rapport aux sièges de l'autre rangée, et ;
- au moins un groupe central de deux rangées contiguës, les sièges d'une rangée étant décalés longitudinalement par rapport aux sièges de l'autre rangée, ledit groupe central étant séparé de chacun des groupes latéraux par un couloir de circulation,
chaque groupe latéral comprenant, entre deux sièges consécutifs d'une première rangée, un pas apte à laisser un passage transversal vers un couloir de circulation pour les passagers de la seconde rangée, lorsque le siège correspondant de la première rangée est en position de couchette, et le au moins un groupe central comprenant, entre deux sièges consécutifs d'une même rangée, un pas inférieur au pas prévu dans les groupes latéraux.

Un tel agencement présente l'avantage d'éviter à tous les passagers d'enjamber le passager voisin pour atteindre le couloir de circulation, lorsque le siège de celui-ci est placé en position de couchette. En outre, cet agencement permet de préserver l'intimité de chaque passager, et améliore ainsi son confort de façon notable.

En outre, le pas des sièges est différent selon les rangées pour optimiser le nombre de siège disposés dans la cabine. Les groupes latéraux de rangées ont un pas suffisant pour permettre le passage d'un utilisateur entre deux sièges en position de couchette, alors que les groupes centraux ont un pas inférieur du fait que tous les occupants des sièges de ces rangées ont un accès à un couloir de circulation.

Dans un mode de réalisation particulier, l'agencement de siège selon l'invention comprend deux groupes centraux, séparés l'un de l'autre par un couloir de circulation.

Selon cette réalisation, la présence de trois couloirs de circulation améliore notablement la circulation des passagers dans la cabine.

Egalement dans un mode de réalisation particulier, chaque siège est pourvu d'un dossier réglable en inclinaison, d'une assise réglable en inclinaison, d'un repose-jambe réglable en inclinaison, et d'une coque fixe de séparation sensiblement en forme de S, ladite coque comprenant une première paroi transversale s'étendant derrière le dossier dudit siège, une deuxième paroi transversale s'étendant devant le siège adjacent de la rangée contiguë, et une paroi longitudinale s'étendant entre les deux parois transversales.

Un espace peut en outre être aménagé entre deux sièges consécutifs sur les rangées disposées le long d'une paroi du fuselage de l'avion.

D'autres objets et avantages de l'invention apparaîtront au cours de la description qui suit, faite en référence aux dessins annexés dans lesquels :
- la figure 1 est une vue schématique de dessus d'une partie d'une cabine d'avion, comprenant un agencement de sièges selon un premier mode de réalisation de l'invention ;
- la figure 2 est une vue à plus grande échelle du détail Il de la figure 1 ; et
- la figure 3 est une vue similaire à la figure 1 d'un autre mode de réalisation.

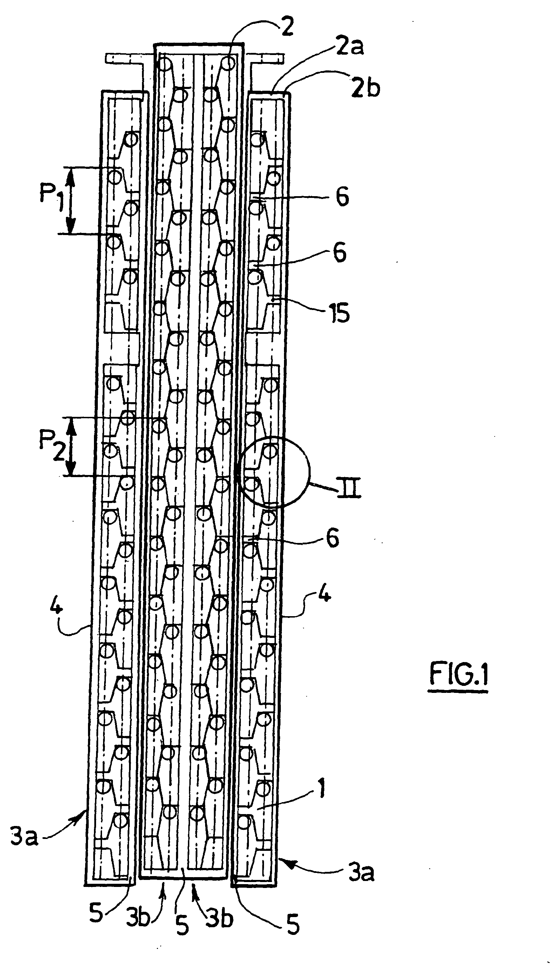

L'agencement de sièges représenté sur la figure 1 est destiné aux avions de type long courrier. Il comprend une pluralité de sièges 1 convertibles en couchettes et disposés en huit rangées 2 parallèles, chaque rangée 2 s'étendant selon la direction longitudinale de l'avion, c'est-à-dire de l'avant vers l'arrière.

Les rangées 2 de sièges sont groupées deux à deux, de sorte à former quatre groupes parallèles 3, à savoir deux groupes latéraux 3a, proches des parois 4 de l'avion, et deux groupes centraux 3b. Chaque groupe 3 est séparé d'un groupe adjacent par un couloir de circulation 5. Trois couloirs de circulation 5 sont donc prévus dans la cabine : deux couloirs entre chaque groupe latéral 3a et le groupe central 3b adjacent, et un couloir entre les deux groupes centraux 3b.

En outre, dans chaque groupe 3 de deux rangées, le siège d'une première rangée 2a et le siège adjacent de la seconde rangée 2b sont décalés longitudinalement l'un par rapport à l'autre.

Dans l'exemple représenté, les deux groupes latéraux 3a de rangées comprennent un passage transversal 6 ménagé entre deux sièges adjacents d'une première rangée 2a, ce passage 6 étant agencé pour permettre la circulation du passager du siège adjacent de la seconde rangée 2b, notamment lorsque ledit siège est en position de couchette. Le pas longitudinal des sièges est ici égal à P1.

En revanche, les deux groupes centraux 3b de rangées ne comprennent pas de passage transversal. Le pas longitudinal des sièges est alors égal à P2 inférieur à P1.

Selon la réalisation représentée, les passagers situés contre les parois 4 de l'avion peuvent donc sortir de leur place en empruntant le passage 6, et tous les autres passagers ont directement accès à l'un ou l'autre des couloirs de circulation 5 soit par leur droite, soit par leur gauche.

Les sièges 1 sont pourvus d'un dossier, d'une assise, d'un repose-jambe réglables en inclinaison. Ils comprennent en outre une coque fixe de séparation disposée derrière le dossier, dite coque fixe de séparation arrière.

La coque fixe est ici sensiblement en forme de S, comprenant une première paroi transversale 7 s'étendant derrière le dossier dudit siège, une deuxième paroi transversale 8 s'étendant devant le siège adjacent de la rangée contiguë, et une paroi longitudinale 9 s'étendant entre les deux parois transversales.

Les sièges 1 sont agencés pour que, en position de couchette, le repose-jambe d'un siège soit disposé sous la coque fixe du siège adjacent suivant la direction longitudinale, dite coque fixe de séparation avant.

En particulier, de tels sièges peuvent être conformes à ceux faisant l'objet du brevet FR-2 820 400, dans lesquels les mouvements de chacun des éléments sont indépendants les uns des autres et des coques fixes de séparation, et dans lesquels des moyens de commande permettent au siège d'adopter, entre une position droite de décollage et d'atterrissage du siège et une position allongée du siège, toutes les positions autorisées par l'espace compris entre la coque fixe de séparation avant et la coque fixe de séparation arrière.

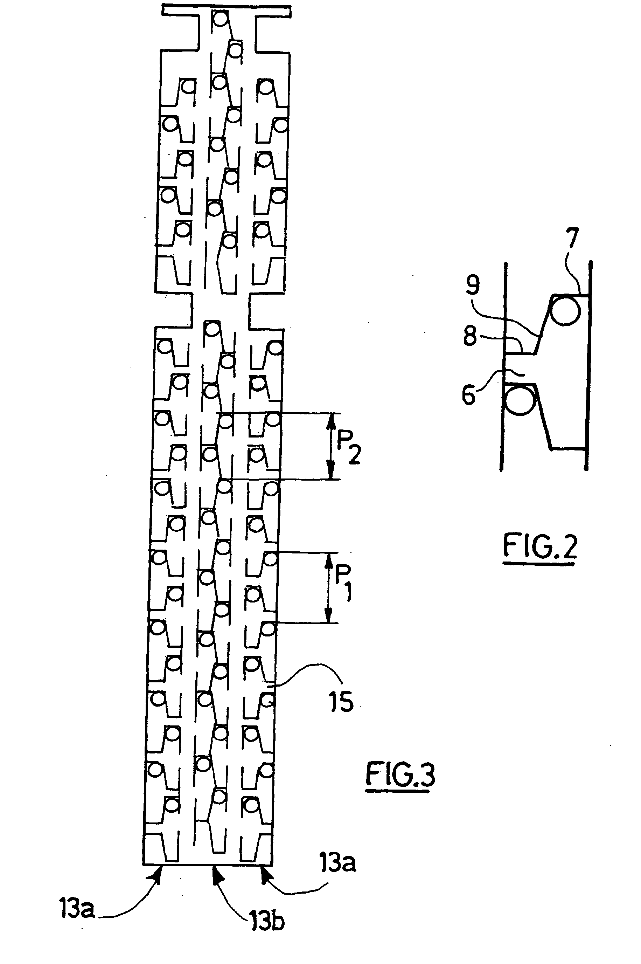

Dans le mode de réalisation de la figure 2, un seul groupe central 13b de deux rangées de sièges est prévu, identique à l'un des groupes 13a de la figure 1. Les groupes latéraux 3a sont identiques à ceux de la figure 1.

Comme précédemment, le pas P1 des sièges des groupes latéraux 13a est supérieur au pas P2 des sièges du groupe central 13b.

Les sièges peuvent être du même type que ceux décrits en référence à la figure 1.

On observera que, dans les deux modes de réalisation représentés, un espace 15 tel que les passages 6 est ménagé longitudinalement entre deux sièges consécutifs des rangées adjacentes à une paroi du fuselage de l'avion. Ces espaces 15 peuvent par exemple être aménagés en rangements.

## Revendications

1. Agencement de sièges individuels pour passagers d'un avion, comprenant une pluralité de sièges convertibles en couchette et disposés en rangées, chaque rangée s'étendant selon la direction longitudinale de l'avion, et chaque siège étant orienté vers l'avant de l'avion, **caractérisé en ce qu**'il comprend :
- deux groupes latéraux (3a ; 13a) de deux rangées contiguës, chaque groupe étant disposé le long d'une paroi (4) de fuselage de l'avion, les sièges d'une rangée étant décalés longitudinalement par rapport aux sièges de l'autre rangée, et ;
- au moins un groupe central (3b ; 13b) de deux rangées contiguës, les sièges d'une rangée étant décalés longitudinalement par rapport aux sièges de l'autre rangée, ledit groupe central étant séparé de chacun des groupes latéraux par un couloir de circulation,
chaque groupe latéral comprenant, entre deux sièges adjacents d'une même rangée, un pas (P1) apte à laisser un passage transversal pour les passagers de l'autre rangée, et le au moins un groupe central comprenant, entre deux sièges adjacents d'une même rangée, un pas (P2) inférieur au pas prévu dans les groupes latéraux.

2. Agencement selon la revendication 1, **caractérisé en ce qu**'il comprend deux groupes centraux, séparés l'un de l'autre par un couloir de circulation.

3. Agencement selon la revendication 1 ou 2, **caractérisé en ce que** chaque siège est pourvu d'un dossier réglable en inclinaison, d'une assise réglable en inclinaison, d'un repose-jambe réglable en inclinaison, et d'une coque fixe de séparation sensiblement en forme de S, ladite coque comprenant une première paroi transversale (7) s'étendant derrière le dossier dudit siège, une deuxième paroi transversale (8) s'étendant devant le siège adjacent de la rangée contiguë, et une paroi longitudinale (9) s'étendant entre les deux parois transversales.

4. Agencement selon la revendication 3 **caractérisé en ce que** les sièges sont agencés pour que, en position de couchette, le repose-jambe d'un siège soit disposé sous la coque fixe du siège adjacent suivant la direction longitudinale.

5. Agencement selon l'une quelconque des revendications précédentes, **caractérisé en ce que**, sur les rangées disposées le long d'une paroi du fuselage de l'avion, un espace (15) est aménagé entre deux sièges consécutifs.

## Claims

1. Layout of individual seats for passengers on an aircraft comprising a multiplicity of seats which can be converted to couchettes and arranged in rows, each row extending in the longitudinal direction of the aircraft and each seat facing towards the front of the aircraft, **characterised in that** it comprises:
- two lateral groups (3a, 13a) of two adjoining rows, each group being positioned along one of the aircraft's fuselage bulkheads (4), the seats of one row being shifted forward longitudinally in relation to the seats of the other row, and
- at least one central group (3b, 13b) of two adjoining rows, the seats of one row being shifted forward longitudinally in relation to the seats of the other row, said central group being separated from each of the lateral groups by an aisle,
each lateral group comprising, between two adjacent seats in the same row, a seat pitch (P1) suitable for allowing the transversal passage of the passengers in the other row, and the at least one central group comprising, between two adjacent seats in the same row, a seat pitch (P2) that is lesser than the seat pitch planned for the lateral groups.

2. Layout according to claim 1, **characterized in that** it comprises two central groups, separated from each other by an aisle.

3. Layout according to claim 1 or 2, **characterised in that** each seat is equipped with an adjustable reclining back, an adjustable seat, an adjustable leg-rest and an essentially S-shaped fixed separation shell, said shell comprising a first transversal bulkhead (7) extending behind the back of said seat, a second transversal bulkhead (8) extending in front of the seat adjacent to the adjoining row, and a longitudinal bulkhead (9) extending between the two transversal bulkheads.

4. Layout according to claim 3, **characterised in that** the seats are laid out so that, when in couchette position, the leg-rest of a seat is positioned under the fixed shell of the adjacent seat following the longitudinal direction.

5. Layout according to any one of the preceding claims, **characterised in that**, in the rows laid out along a fuselage bulkhead of the aircraft, a space (15) is created between two consecutive seats.

## Patentansprüche

1. Anordnung von einzelnen Sitzen für Passagiere eines Flugzeuges, die mehrere Sitze umfasst, die in Liegestellung gebracht werden können und in Reihen angeordnet sind, wobei sich jede Reihe entlang einer Längsrichtung des Flugzeugs erstreckt und jeder Sitz zum vorderen Teil des Flugzeugs gerichtet ist, **dadurch gekennzeichnet, dass** sie umfasst:
- zwei seitliche Gruppen (3a, 13a) zweier aneinander angrenzender Reihen, wobei jede Gruppe entlang einer Wand (4) des Flugzeugrumpfes angeordnet ist und die Sitze einer Reihe gegenüber den Sitzen der anderen Reihe in Längsrichtung verschoben sind, und
- mindestens eine mittlere Gruppe (3b, 13b) zweier aneinander angrenzender Reihen, wobei die Sitze einer Reihe gegenüber den Sitzen der anderen Reihe in Längsrichtung verschoben sind und die mittlere Gruppe von jeder der seitlichen Gruppen durch einen umlaufenden Gang getrennt ist,
wobei jede seitliche Gruppe zwischen zwei benachbarten Sitzen derselben Reihe einen Schritt (P1) umfasst, der geeignet ist, einen Querdurchgang für die Passagiere der anderen Reihe zu lassen, und die mindestens eine mittlere Gruppe zwischen zwei benachbarten Sitzen derselben Reihe einen Schritt (P2) umfasst, der kleiner ist als der Schritt, der zwischen den seitlichen Gruppen vorgesehen ist.

2. Anordnung gemäß Anspruch 1, **dadurch gekennzeichnet, dass** sie zwei mittlere Gruppen umfasst, die voneinander durch einen umlaufenden Gang getrennt sind.

3. Anordnung nach Anspruch 1 oder 2, **dadurch gekennzeichnet, dass** jeder Sitz mit einer in der Neigung verstellbaren Rückenlehne, einer in der Neigung verstellbaren Basis, einer in der Neigung verstellbaren Fußstütze und einer festen Trennschalung, praktischerweise in S-Form, umfasst, wobei die Schalung eine erste Querwand (7), die sich hinter der Rückenlehne des Sitzes erstreckt, eine zweite Querwand (8), die sich vor dem benachbarten Sitz der angrenzenden Reihe ertreckt, und eine Längswand (9), die sich zwischen den beiden Querwänden erstreckt, umfasst.

4. Anordnung nach Anspruch 3, **dadurch gekennzeichnet, dass** die Sitze solcherart angeordnet sind, dass in Liegeposition die Fußstütze eines Sitzes sich unter der festen Schalung des in Längsrichtung benachbarten Sitzes befindet.

5. Anordnung nach einem der vorhergehenden Ansprüche, **dadurch gekennzeichnet, dass** bei den entlang der Wand des Flugzeugrumpfes angeordneten Reihen zwischen zwei aufeinanderfolgenden Sitzen eine Lücke (15) vorgesehen ist.
